# EUROPEAN PATENT SPECIFICATION

(11) **EP 1 483 318 B1**
(45) Date of publication and mention of the grant of the patent: **09.05.2007**
(21) Application number: 03719369.5
(22) Date of filing: 11.03.2003
(51) Int. Cl.: C08K 5/00, C08K 5/10, C08L 29/14, B32B 17/10, C08F 8/28, C08J 5/18

(54) **LOW-COLOR STIFF PVB LAMINATES**
STEIFE PVB-LAMINATE MIT REDUZIERTER VERFÄRBUNG
STRATIFIES PVB RIGIDES PEU COLORES

(30) Priority: 12.03.2002 US 363936 P
(43) Date of publication of application: 08.12.2004
(73) Proprietor: E.I. DU PONT DE NEMOURS AND COMPANY, Wilmington, Delaware 19898 (US)
(72) Inventor: WONG, Bert, C., Hockessin, DE 19707 (US); RYMER, Donald, L., Little Hocking, OH 45742 (US); READ, Nolan, K., III, Vienna, WV 26105 (US)
(74) Representative: Morf, Jan Stefan
(86) International application number: PCT/US2003/007352
(87) International publication number: WO 2003/078521

(56) References cited:
- EP-A- 1 036 775
- WO-A-99/61243
- US-A- 4 696 971
- US-A- 5 187 217
- US-A- 5 322 875
- US-A- 5 886 075

## Description

This application claims the benefit of U.S. Provisional Application No. 60/363,936, filed March 12, 2002.

### BACKGROUND OF THE INVENTION

Plasticized polyvinyl butyral (PVB) sheet is used in the manufacture of laminate structures such as, for example: windshields for vehicles including automobiles, motorcycles, boats and airplanes; homes and buildings; shelving in cabinets and display cases; and other articles where structural strength is desirable in a glass sheet. In many applications, it is desirable that the laminate be transparent and colorless, or at least have very low color. Undesired or unintended color in a glass laminate can be a result of impurities from various sources. In some cases, color can occur in the PVB interlayer. Color in a PVB sheet can result from several sources in the PVB resin, or from the manufacturing process. For example, color can result from instability of the PVB resin, from impurities, or from other additives present in the PVB composition. Color in a PVB sheet can develop during storage of the PVB, or be caused by process conditions to which the resin is subjected.

In a conventional PVB sheet manufacturing process, additives can be included to protect PVB from developing color. Examples of such additives are antioxidants, such as octylphenol, and ultra violet light stabilizers. In some commercial applications, it has been found that combinations of additives can be required for satisfactory results. For example, conventional PVB sheet compositions can include, Tinuvin^{®} P, Tinuvin^{®} 123 in addition to Tinuvin^{®} 326 to obtain satisfactory light stability in the sheet. Using combinations of additives can add additional expense and complexity to the manufacturing process, particularly if a change in the additives must be made. For example, in some instances changing the composition used in a chemical or polymer manufacturing process can have unexpected results. The unexpected results can sometimes be unwanted.

Conventional PVB sheet typically includes a plasticizer in order to increase the flexibility and processibility of the PVB sheet. Generally, the higher the concentration of plasticizer, the more flexible the sheet. Various plasticizers are conventional in the manufacture of PVB, and include such plasticizers as: diesters of polyethylene glycols such as triethylene glycol di(2-ethylhexanoate) (3GO) and tetraethylene glycol diheptanoate (4G7), for example. Typically, plasticizer is included in amounts of greater than 30 pph, based on the total dry weight of the resin. Depending upon the application, as well as other factors, highly plasticized PVB can have as much as 60 pph of plasticizer.

In some special applications, however, it can be desirable to include small amounts of plasticizer so that a stiff PVB sheet can be obtained. One problem with using low plasticizer concentrations is that the PVB composition may require exposure to higher temperatures in order to extrude the resin and/or to shape the extruded sheet for use in the application for which it was intended. However, when a conventional PVB resin is exposed to such high temperature, color can develop in the sheet thereby making it unusable in applications where clarity and high laminate transparency are critical.

US 5,187,217 teaches the preparation of a plasticized PVB composition with a low content of plasticizer wherein the surfactant is completely removed from the PVB composition.

It can be desirable in the art of manufacturing PVB laminate articles, to prepare a stiff PVB sheet, wherein the sheet includes a low concentration of plasticizer, by a process wherein the PVB composition does not develop a high color level upon exposure to high temperatures during extrusion or lamination.

It can also be desirable to obtain PVB sheet by a process wherein the color of the sheet can be improved by proper selection of additives used in the process.

### SUMMARY OF THE INVENTION

In one aspect, the present invention is a plasticized PVB composition consisting essentially of: polyvinylbutyral having a hydroxyl number of from 15 to 25; a plasticizer or mixture of plasticizers present in a finite amount of less than 30 pph based on the dry weight of the resin composition; a surfactant; and optionally including either (i) a PVB bleaching compound, or (ii) an antioxidant and a UV light stabilizer, or (iii) both (i) and (ii), wherein (i) is optional only if the surfactant is also a bleaching compound.

In another aspect, the present invention is an article comprising: a plasticized PVB sheet interlayer wherein the PVB sheet consists essentially of: polyvinylbutyral having a hydroxyl number of from 15 to 25; a plasticizer or mixture of plasticizers present in a finite amount of less than 30 pph based on the dry weight of the resin composition; a surfactant; and optionally including either (i) a PVB bleaching compound, or (ii) an antioxidant and a UV light stabilizer, or (iii) both (i) and (ii), wherein the interlayer was obtained after extrusion at a temperature in the range of from 225°C to 245°C, and wherein the interlayer has a yellowness index (YID) measurement of less than about 12, wherein (i) is optional only if the surfactant is also a bleaching compound.

In still another aspect, the present invention is a laminate article useful as architectural glass and/or as automobile glass, train glass, or boat glass comprising: a plasticized PVB sheet consisting essentially of less than 30 pph of either 3GO or dibutyl sebacate as plasticizer, wherein the PVB sheet has a glass transition temperature (T_{g}) of from at least 35°C to 60°C and a YID of less than 12.

In still another aspect, the present invention is a process for preparing a low color, PVB sheet comprising the steps: (I) admixing polyvinyl alcohol, butyraldehyde, an acid or mixture of acids, water, and a surfactant (II) stabilizing the mixture obtained in step (I) by (a) raising the pH of the mixture to at least pH 10 (b) isolating the resin by draining the liquid, (c) washing the resin with neutral pH water; (III) plasticizing the PVB resin composition with plasticizer in a finite amount of less than about 30 pph based on the dry weight of the PVB resin; (IV) optionally mixing (a) a PVB bleaching compound and/or (b) an antioxidant and a UV light stabilizer with the PVB resin composition; and (V) extruding the PVB sheet at a temperature of from 225°C to 245°C to obtain a PVB sheet having a T_{g} of from at least 35°C to 60°C and a YID of less than about 12, wherein (a) a bleaching compound is optional only if the surfactant is also a bleaching compound.

### DETAILED DESCRIPTION

In one embodiment, the present invention is a plasticized PVB sheet composition that includes polyvinylbutyral having a hydroxyl number of from 15 to 25, plasticizer in an amount of less than 30 pph based on the dry weight of the PVB resin, and a PVB bleaching compound.

PVB can be manufactured according to known processes. For example, U.S. Patent Number 3,153,009 describes a process for commercial manufacture of PVB. U.S. Patent Number 4,696,971 also describes a process for manufacturing PVB wherein sodium dioctylsulfosuccinate (DOSS) is used as a surfactant. With some exceptions that will be obvious to one skilled in the art, the teachings of the above-referenced patents are hereby incorporated by reference.

The PVB composition of the present invention includes the plasticizer in a finite amount, but at a concentration of less than 30 pph, based on the dry weight of the PVB resin. The present invention preferably includes plasticizer in an amount of from 5 to 30 pph, more preferably the plasticizer content is from 15 to 30 pph. Even more preferably the plasticizer content is from 18 to 28 pph, and most preferably from 18 to 22 pph.

The term flake, as used in the present invention, describes a particular physical form of PVB resin material, that is, granular or particulate versus a film or a sheet. The physical form of the resin does not necessarily indicate a different PVB composition within the present application, even though sheets and/or films may include additives not found in the resin flake.

Plasticizers of the present invention can be chosen from any that are known or used conventionally in the manufacture of plasticized PVB sheeting compositions. For example, a plasticizer suitable for use herein can be a plasticizer or a mixture of plasticizers selected from the group consisting of: diesters obtained from the chemical reaction of aliphatic diols with carboxylic acids, including diesters of polyether diols or polyether polyols; and, esters obtained from polyvalent carboxylic acids and aliphatic alcohols. For convenience, when describing the sheet compositions of the present invention, a mixture of plasticizers can be referred to herein as "plasticizer". That is, the singular form of the word "plasticizer" as used herein can represent the use of either one plasticizer or the use of a mixture of two or more plasticizers in a given sheet composition. The intended use will be apparent to a reader skilled in the art. Preferred plasticizers for use herein are diesters obtained by the reaction of triethylene glycol or tetraethylene glycol with aliphatic carboxylic acids having from 6 to 10 carbon atoms; and diesters obtained from the reaction of sebacic acid with aliphatic alcohols having from 1 to 18 carbon atoms. More preferably the plasticizer is either 4G7, 3GO or dibutyl sebacate (DBS). Most preferably the plasticizer is 3GO.

The composition of the present invention optionally includes at least one PVB bleaching compound. The PVB bleaching compound is only optional if the surfactant is also a bleaching compound. A PVB bleaching compound (bleaching PVB bleaching compound (bleaching compound) of the present invention is any compound that can reduce or eliminate color from a PVB sheet relative to the color of an otherwise identical composition, treated using an identical or similar process, with the exception that a bleaching compound is not present. The mode of the bleaching action demonstrated by the bleaching compound is not critical to the present invention. For example, a bleaching compound useful in the practice of the present invention can be a compound that reacts directly with color-forming compounds (color bodies) present in a PVB sheet composition, or a compound that is capable of yielding a compound that reacts directly with color-bodies. A bleaching compound can be a compound that can decompose in situ to yield decomposition products capable of reacting with color bodies present in a PVB sheet composition. A bleaching compound in the practice of the present invention can be a compound that inhibits the formation of color bodies. Bleaching compounds of the present invention include, for example, inorganic bisulfites such as sodium or potassium bisulfite; organic bisulfites such as tetramethylammonium bisulfite; and compounds similar in structure or function. Bleaching compounds also include sulfosuccinates such as dialkyl sulfosuccinates. For example, the present invention can include DOSS as a bleaching compound.

A bleaching compound of the present invention can be included in any effective finite amount. An effective amount for the purposes of the present invention is any amount that reduces the color of a PVB sheet relative to the color of an identical or substantially similar PVB sheet composition without the bleaching compound. Color measurement can be done according to any conventional standard practice. Alternatively, in the absence of comparative data, an effective amount is any amount that reduces the color of a PVB sheet to a yellowness index (YID) of less than 12 YID. Preferably the YID is less than about 10, more preferably less than 8, and most preferably less than 6.

A bleaching compound can be included in an amount of from 0.01 to 0.85 pph, based on the weight of polyvinyl alcohol (PVA) used in the preparation of PVB. Preferably, the bleaching compound is present in an amount of from 0.05 to 0.80 pph, more preferably in an amount of from 0.10 to 0.75 pph, and most preferably in an amount of from 0.15 to 0.70 pph. While color reduction in a PVB sheet is an important consideration, the amount of bleaching compound included will also be a function of the cost of production and the other properties that may be affected by including the additive.

The present invention includes a surfactant. A surfactant suitable for use herein can be any that is known to be useful in the art of polyvinylbutyral manufacture. For example, surfactants suitable for use herein include: sodium lauryl sulfate; ammonium lauryl sulfate; sodium dioctyl sulfosuccinate; ammonium perfluorocarboxylates having from 6 to 12 carbon atoms; sodium aryl sulfonates, adducts of chlorinated cyclopentadiene and maleic anhydride; partially neutralized polymethacrylic acid; alkylaryl sulfonates; sodium N-oleyl-N-methyl taurate; sodium alkylaryl polyether sulfonates; triethanolamine lauryl sulfate; diethyl dicyclohexyl ammonium lauryl sulfate; sodium secondary-alkyl sulfates; sulfated fatty acid esters; sulfated aryl alcohols. Preferable surfactants include sodium lauryl sulfate, sodium dioctyl sulfocuccinate, sodium cocomethyl tauride, and decyl(sulfophenoxy)bezenesulfonic acid disodium salt.

The surfactant can be included in any effective amount for the particular set of process conditions practiced. The surfactant can be included in an amount of from 0.01 to 0.85 pph by weight, based on the weight of PVA used to prepare PVB. Preferably the surfactant is included in an amount of from 0.10 to 0.80 pph. More preferably, the surfactant is included in an amount of from 0.15 to 0.75 pph. Most preferably, the surfactant is included in an amount of from 0.15 to 0.70 pph.

The surfactant and the bleaching compound can be the same compound, or can perform both functions. The bleaching compound is optional only in the event that the surfactant can also perform the function of a bleaching compound. Otherwise the bleaching compound is considered to be essential in the practice of the present invention. For example, DOSS can be used in the practice of the present invention as a surfactant. DOSS can also be a bleaching compound in the practice of the present invention. In one particularly preferred embodiment, DOSS can be included as both a surfactant and as a bleaching compound. In this embodiment, the use of a bleaching compound other than DOSS is optional.

Antioxidants can be optionally included in a PVB composition of the present invention during sheet preparation to inhibit the oxidation of the PVB sheet and/or components. Preferred antioxidants are known conventionally and available commercially. Most preferred are bis-phenolic antioxidants, which are surprisingly more suitable for preparing low color PVB sheeting, particularly when 3GO is used as plasticizer. Bis-phenolic antioxidants are available and can be obtained commercially. Suitable bis-phenolic antioxidants include 2,2'-ethylidenebis(4,6-di-t-butylphenol); 4,4'-butylidenebis(2-t-butyl-5-methylphenol); 2,2'-isobutylidenebis(4,6-dimethylphenol); and 2,2'-methylenebis(6-t-butyl-4-methylphenol), for example. Bis-phenolic antioxidants are commercially available under the tradename of ANOX^{™} 29, LOWINOX^{®} 22M46, LOWINOX^{®} 44B25, and LOWINOX^{®} 22IB46, for example.

An antioxidant can be included in any effective finite amount. Preferably, the antioxidant is included in an amount of from 0.01 to 0.6%, based on the total weight of the sheet. More preferably, the antioxidant is present in amount of from 0.03 to 0.3%, most preferably in an amount of from 0.05 to 0.25%.

Other additives are known conventionally to be useful, and can be included in a sheet composition of the present invention. Such additives include: light stabilizers, particularly UV light stabilizers, such as Tinuvin^{®} P; Tinuvin^{®} 326, and Tinuvin^{®} 123. UV light stabilizers can stabilize the PVB composition by absorbing ultraviolet light and preventing unwanted effects by the UV light on the PVB. Adhesion control agents such as alkali and alkaline earth metal salts of carboxylic acids, alkaline earth metal salts of inorganic acids, or a combination of such salts can be added. Surface tension controlling agents such as Trans^{®} 290 or Trans^{®} 296 available from Trans-Chemco; or Q2-3183A^{®} available from Dow Chemical can be used in the practice of the present invention. The use of Trans^{®} 290 or Trans^{®} 296 is preferred.

A PVB resin of the present invention can be obtained by processes known in the art of PVB manufacture. PVB resins used in the practice of the present invention can be prepared by mixing PVA with butyraldehyde in an aqueous medium in the presence of an acid or mixture of acids, at a temperature of from 5°C to 100°C.

Typically, the ratio of PVA to butyraldehyde can be chosen such that the PVB has residual hydroxyl functionality, conventionally reported as OH number. Residual hydroxyl functionality can vary according to what properties are desirable in the PVB. The relative amounts of butyraldehyde and PVA required to obtain the desired OH number in the PVB resin will be readily apparent to those skilled in the art of PVB manufacture. In the practice of the present invention residual hydroxyl can be in the range of from about 14 to 30. Preferably, the OH number is from 15 to 25. More preferably, the OH number is from 15 to 20, and most preferred in the practice of the present invention is PVB resin having an OH number in the range of from 17 to 19. The OH number can be determined according to standard methods such as ASTM D1396-92.

In a preferred embodiment, a low color PVB sheet of the present invention can be obtained by a process comprising the steps: (I) admixing polyvinyl alcohol, butyraldehyde, an acid or mixture of acids, water, and a surfactant (II) stabilizing the mixture obtained in step (I) by (a) raising the pH of the mixture to at least pH 10 (b) isolating the resin by draining the liquid, (c) washing the resin with neutral pH water; (III) plasticizing the PVB resin composition with from 10 to 30 pph of plasticizer based on the dry weight of the PVB resin; (IV) optionally mixing (a) a PVB bleaching compound and/or (b) an antioxidant and a UV light stabilizer with the PVB resin composition; and (V) extruding the PVB sheet composition at a temperature of from 225°C to 245°C to obtain a PVB sheet having a T_{g} in the range of from 35°C to 60°C, and a YID of less than about 12, wherein (a) the bleaching compound is optional only if the surfactant is also a bleaching compound.

The steps of the process described herein can be carried out in varied order. For example, while it can be necessary to carry out step (I) before step (II) it is not essential, for the purpose of obtaining a low color sheet of the present invention, that steps (III) or (IV) be carried out in any particular order. Although it may be preferable to implement these steps just prior to, or simultaneous with, step (V). Also, the order of addition of components is not critical in the practice of the present invention, although a skilled artisan will recognize that there may be other benefits of carrying out the process in a consistent and ordered manner. For example, plasticizer can be mixed with the PVB either before or during the extrusion of the PVB composition, as described in U.S. Pat. No. 5,886,075.

Plasticizer can be added in any amount desirable to obtain a plasticized PVB composition. To obtain a stiff PVB sheet in one embodiment of the present invention, plasticizer is added in an amount of less than 30 pph, based upon the total dry weight of the resin. The "dry weight" as used herein refers to the weight of the resin after water has been removed from the resin.

The glass transition temperature (T_{g}) of a PVB sheet is dependent in part upon the concentration of plasticizer included in the composition. A PVB sheet useful in the practice of the present invention has a Tg of from 35°C to 60°C, as measured by Dynamic Mechanical Analysis ASTM D4065 (DMA), using the tangent delta (phase shift at 1 Hz) data as indicator. Preferably, the Tg is from 40°C to 57°C, more preferably from 45°C to 57°C, most preferably from 50°C to 55°C.

In one of the preferred embodiments of the present invention, a stiff PVB sheet can be obtained having low color and low concentration of plasticizer. For sheet having low concentration of plasticizer, it can be necessary to extrude the sheet at a higher temperature than when using higher amounts of plasticizer. For example, PVB resin plasticized with from 5 to 30 pph plasticizer can be extruded at a temperature of from 225°C to 245°C. Preferably the resin can be extruded at a temperature of from 227°C to 245°C. More preferably, the resin can be extruded at a temperature of from 228 °C to 242°C, and most preferably from 230°C to 240°C.

A low color PVB sheet suitable for the purposes herein can be obtained by a process that comprises the steps of: (1) isolating PVB flake from a PVA/butyraldehyde reaction mixture previously described herein; (2) optionally admixing an antioxidant and a UV light stabilizer with the.plasticizer to obtain a plasticizer/additive mixture (plasticizer mixture); and (3) co-extruding the flake, plasticizer, antioxidant, and UV light stabilizer, or alternatively co-extruding the flake and the plasticizer mixture at a feed ratio of plasticizer mixture to dry of flake from 5:100 (wt:wt) to 30:100 (wt:wt) at a temperature of from 225°C to 245°C to obtain a low-color PVB sheet having a YID of less than about 12. It is preferable to admix the antioxidant/UV light stabilizer with the plasticizer prior to extrusion of the sheet.

In still another embodiment, a laminate article can be obtained from a PVB sheet of the present invention. Procedures for preparing glass/PVB laminates are well known in the art, and a skilled artisan would be able to construct a laminate from the presently claimed PVB sheet. A glass/PVB laminate article as claimed in the present invention can be obtained, for example, by bringing the surfaces of the PVB and glass into contact, pressing the surfaces together at ambient temperature, and then removing air from the laminate structure in an autoclave. The surface of the PVB can be roughened to facilitate removal of air from the laminate. Other procedures are known and used conventionally. While PVB/glass laminates are described herein, PVB can be used as interlayer material for laminating to other plastic materials such as polyesters or ionomeric sheeting, for example.

Laminates of the present invention can be useful in various applications for protection from the environment in architectural applications, and/or in vehicles such as automobiles, boats and trains. Architectural uses for stiff PVB laminates of the present invention include, but are not limited to: external uses such as external windows on buildings, external doors, partitions; internal uses such as office windows, office doors, glass partitions, table tops, shelves, cabinet doors, protective covers for tables, room dividers, picture frame glass, display cabinets, display cases, and the like. In vehicles, uses for laminates of the present invention include, but are not limited to: windshields; light covers; body glass, such as sun roof, moon roof, and/or side windows; internal doors; partitions; cabinet doors, and the like. Transparency and clarity are important considerations in applications such as these. Just as important is the protection afforded by the interlayer against splintering and expulsion of glass particles in the event of accidental or intentional impact against the glass laminate.

Laminates of the present invention can include an additive to block the transmission of UV light through the laminate. The additive is preferably the same additive as the UV light stabilizer. UV light is preferably absorbed by the laminate so that less than 10% of UV light is transmitted through the laminate. Preferably less than 8% of the UV light is transmitted through the laminate, more preferably less than 6% UV light is transmitted, and most preferably less than 3%.

PVB interlayers of the present invention have a thickness of greater than 0.254 mm. Preferably, PVB interlayers of the present invention have a thickness in the range of form about 0.254 mm to about 1.6 mm. Multiple layers of PVB can be laminated together or in alternate layers of a laminate. Such multilayer laminates can have PVB interlayers that have a total thickness of greater than 1 mm. Where it is desirable to obtain a laminate wherein the total interlayer thickness is at least 1 mm thick, the YID of the interlayer should not be greater than 12, because the transparency of the laminate can be substantially reduced.

In the present application, the term flake can be used to describe a particular physical form of PVB resin material, that is, granular or particulate versus a film or a sheet. The physical form of the resin does not necessarily indicate a different PVB composition within the present application, even though sheets and/or films may include additives not found in the resin flake.

### EXAMPLES

The following Examples and comparative examples are presented to further illustrate the present invention. The Examples are not intended to limit the scope of the invention in any manner, nor should they be used to define the claims or specification in any manner that is inconsistent with the invention as claimed and/or as described herein.

Analytical tests for Hydroxyl number and YID were performed for each of the examples and comparative examples according to the methods below.
Hydroxyl number: ASTM D 1396-92.
Sheet yellowness index (YID)
   A PVB chip is made with 21.0 grams of sheet, and heat pressed into a 10.0 mm thick disk of 50.8 mm diameter. Chip preparation involves preheating a stack of 50.8 mm disks cut from the sheet in a mold for one minute at 2200 N force and 185°C, then increasing the pressing force to 32,000 N at 185°C for two minutes, and cooling under the same force for 7.5 minutes. No residual surface pattern that was on the extruded sheet is visible in the chip. Yellowness index was determined per ASTM D1925-70 on the 10.0 mm thick chip.
Glass Transition Temperature - T_{g} is determined by DMA using the procedure of ASTM D4065, using the tangent delta at 1Hz.

### Example 1

Poly(vinyl butyral) sheet was prepared as follows: at 90°C, a mixture comprising 32 parts by weight of poly(vinyl alcohol) of average degree of polymerization 618 and 99.5% hydrolyzed and 68 parts by weight of PVA of average degree of polymerization 1005 and 99.5% hydrolyzed was dissolved in 615 parts by weight of demineralized water. To this solution was added 1 part by weight of 88% para-toluene sulfonic acid and enough sulfuric acid to bring the dissolved PVA solution to a pH of 2. Using the procedure described in US Patent 3,153,009, 62 parts by weight of n-butyraldehyde and 0.47 parts by weight of 70% DOSS and the PVA solution were charged into a vessel maintained at 90°C. After a one hour hold time, a slurry was obtained and the slurry was stabilized with a sodium hydroxide solution to raise the pH to 11. Concurrent with the stabilization, 0.07 parts by weight Trans^{®} 290 surface tension stabilizing agent was added. The slurry was then washed and cooled with demineralized water. A granular, white PVB resin with residual hydroxyl number of 18.6 was obtained. The flake was mixed with 3GO plasticizer containing 4 grams per liter of Tinuvin^{®} P and 8 grams per liter of Lowinox^{®} 44B25 antioxidant and was extruded so that the residence time in the extrusion system was about 15 to 25 minutes. The feed rate ratio of plasticizer to dry flake was 35:100 (wt:wt). Potassium formate solution was injected so as to deliver a potassium concentration of 10 parts per million (ppm) in the sheet. Melt temperature measured at the slot die was between 210 and 215°C. Sheet YID was 5.85.

### Example 2

PVB sheet was made in the manner as in Example 1, except that the feed ratio of the plasticizer to dry PVB flake was 20:100, and the melt residence time was 25 to 40 minutes. Melt temperature at the die was 233°C. Sheet yellowness index was 5.05.

### Comparative Example C1

PVB flake was prepared as in Example 1 except that 0.4 parts by weight of sodium lauryl sulfate was used in the place of DOSS as the surfactant, and no other surface tension modifiers were added. A granular, white PVB resin with residual hydroxyl number of 18.6 was obtained. Using the flake made with sodium lauryl sulfate as described here, sheet was prepared as in Example 1. Melt temperature measured at the slot die was between 210 and 213°C. Sheet yellowness was 25.05.

### Comparative Example C2

The flake described in Example C1 was used to prepare sheet as in Example 1, except that the feed rate ratio of 3GO plasticizer to dry resin of 24:100, and the potassium level in the sheet was 50 ppm, and the melt residence time in the system was 25-40 minutes. Melt temperature at the die was between 228 and 233°C. Sheet yellowness was 53.82.

## Claims

1. A plasticized PVB composition consisting essentially of: polyvinylbutyral (PVB) having a hydroxyl number of from 15 to 25; a plasticizer or mixture of plasticizers present in a finite amount of less than 30 pph based on the dry weight of the resin composition; a surfactant; and optionally including either (i) a PVB bleaching compound, or (ii) an antioxidant and a UV light stabilizer, or (iii) both (i) and (ii), wherein (i) is optional only if the surfactant is also a bleaching compound.

2. The composition of Claim 1 wherein the plasticizer is triethylene glycol di(2-ethylhexanoate).

3. The composition of Claim 2 wherein the plasticizer is dibutyl sebacate.

4. The composition of Claim 3 wherein the composition includes a bleaching compound, an antioxidant, and a UV light stabilizer.

5. The composition of Claim 1 wherein the the surfactant also performs the function of a bleaching compound.

6. The composition of Claim 5 wherein the surfactant is sodium dioctylsulfosuccinate.

7. The composition of Claim 6 wherein the antioxidant is 2,2'-methylenebis(6-t-butyl-4-methylphenol).

8. The composition of Claim 7 wherein the plasticizer is present in an amount of from 5 to 30 pph.

9. The composition of Claim 8 wherein the plasticizer is present in an amount of from 15 to 30 pph.

10. The composition of Claim 9 wherein the plasticizer is present in an amount of from 18 to 28 pph.

11. The composition of Claim 10 wherein the plasticizer is present in an amount of from 18 to 22 pph.

12. An article comprising at least one layer of the PVB composition of any of Claims 1-11.

13. The article of Claim 12 wherein the article is a laminate comprising at least one interlayer of the PVB composition of any of Claims 1-11, wherein the interlayer has a yellowness index (YID) of less than about 12 and wherein the interlayer was obtained by a process comprising the step: extrusion of PVB sheet at a temperature in the range of from 225°C to 245°C.

14. The article of Claim 13 wherein the article is a laminate comprising at least one layer of PVB and at least one layer of glass wherein the PVB layer has a thickness in the range of from 0.254 mm to 1.6 mm.

15. The article of Claim 14 wherein the laminate comprises more than one PVB interlayer, and wherein the combined thickness of the PVB interlayers is in the range of from 0.75 to 1.6 mm.

16. The article of Claim 14 wherein the laminate is useful as: architectural glass; automobile glass; train glass; or boat glass.

17. The article of Claim 16 wherein the laminate is useful in an automobile, train, or boat as a:
windshield; light cover; body glass, such as sun roof, moon roof, or back and/or side window; internal door; cabinet; cabinet door; partition.

18. The article of Claim 17 wherein the article is an automobile windshield, light cover, moon roof, sun roof, or back and/or side window.

19. The article of Claim 12 wherein the laminate is useful for: external windows on buildings; external doors; partitions; office windows; office doors; glass partitions; table tops; shelves; cabinet doors; protective covers for tables; room dividers; picture frame glass; display cabinets; display cases.

20. The article of Claim 12 wherein the laminate is obtained by a process comprising the steps: (i) bringing a PVB polymer interlayer and a glass plate into contact; (ii) removing air from between the glass and the interlayer; and (iii) applying heat and external pressure to adhesively bond the glass plate to the interlayer.

21. A process for preparing a low color PVB sheet comprising the steps: (I) admixing polyvinyl alcohol, butyraldehyde, an acid or mixture of acids, water, and a surfactant (II) stabilizing the mixture obtained in step (I) by (a) raising the pH of the mixture to at least pH 10 (b) isolating the resin by draining the liquid, (c) washing the resin with neutral pH water; (III) plasticizing the PVB resin composition with plasticizer in a finite amount of less than 30 pph based on the dry weight of the PVB resin; (IV) optionally mixing (a) a PVB bleaching compound and/or (b) an antioxidant and a UV light stabilizer with the PVB resin composition; and (V) extruding the PVB composition at a temperature of from 225°C to 245°C to obtain a PVB sheet having a T_{g} in the range of from 35°C to 60°C, and a YID of less than about 12, wherein (a) the PVB bleaching compound is optional only if the surfactant is also a bleaching compound.

22. The process of claim 21 wherein the surfactant also performs the function of a bleaching compound.

23. The process of claim 22 wherein the surfactant is sodium dioctylsulfosuccinate.

## Patentansprüche

1. Plastifizierte PVB-Zusammensetzung bestehend im wesentlichen aus: Polyvinylbutyral (PVB) mit einer Hydroxylzahl von 15 bis 25; ein in einer begrenzten, auf dem Trockengewicht der Harzzusammensetzung basierenden Menge von weniger als 30 pph Weichmacher oder einer Mischung von Weichmachern; ein Tensid; und wahlweise umfassend entweder (i) eine PVB-Bleichverbindung; oder (ii) ein Antioxidationsmittel und einen UV-Licht-Stabilisator; oder (iii) beides (i) und (ii), worin (i) nur optional ist, wenn das Tensid auch eine Bleichverbindung ist.

2. Zusammensetzung nach Patentanspruch 1, worin der Weichmacher Triethylenglycol-di(2-ethylhexanoat) ist.

3. Zusammensetzung nach Patentanspruch 2, worin der Weichmacher Dibutylsebacat ist.

4. Zusammensetzung nach Patentanspruch 3, worin die Zusammensetzung eine Bleichverbindung, ein Antioxidationsmittel und einen UV-Lichtstabilisator umfasst.

5. Zusammensetzung nach Patentanspruch 1, worin das Tensid auch die Funktion der Bleichverbindung übernimmt.

6. Zusammensetzung nach Patentanspruch 5, worin das Tensid Natriumdioctylsulfosuccinat ist.

7. Zusammensetzung nach Patentanspruch 6, worin das Antioxidationsmittel 2,2'-Methylenbis(6-t-butyl-4-Methylphenol) ist.

8. Zusammensetzung nach Patentanspruch 7, worin der Weichmacher in einer Menge von 5 bis 30 pph vorliegt.

9. Zusammensetzung nach Patentanspruch 8, worin der Weichmacher in einer Menge von 15 bis 30 pph vorliegt.

10. Zusammensetzung nach Patentanspruch 9, worin der Weichmacher in einer Menge von 18 bis 28 pph vorliegt.

11. Zusammensetzung nach Patentanspruch 10, worin der Weichmacher in einer Menge von 18 bis 22 pph vorliegt.

12. Artikel umfassend mindestens eine Schicht der PVB-Zusammensetzung nach irgendeinem der Patentansprüche 1 bis 11.

13. Artikel nach Patentanspruch 12, worin der Artikel ein Laminat ist, das mindestens eine Zwischenschicht der PVB-Zusammensetzung nach irgendeinem der Patentansprüche 1 bis 11 ist, worin die Zwischenschicht einen Gelbindex (YID) von weniger als ungefähr 12 hat und worin die Zwischenschicht durch ein Verfahren erhalten wurde, das folgenden Schritt umfasst: Extrusion eines PVB-Blatts bei einer Temperatur im Bereich von 225°C bis 245°C.

14. Artikel nach Patentanspruch 13, worin der Artikel ein Laminat ist, das mindestens eine PVB-Schicht und mindestens eine Glasschicht ist, worin die PVB-Schicht eine Dicke im Bereich von 0,254 mm bis 1,6 mm hat.

15. Artikel nach Patentanspruch 14, worin das Laminat mehr als eine PVB-Zwischenschicht umfasst, und worin die kombinierte Dicke der PVB-Zwischenschichten im Bereich von 0,75 bis 1,6 mm ist.

16. Artikel nach Patentanspruch 14, worin das Laminat nützlich ist als: architektonisches Glas; Automobilglas; Zugglas; oder Schiffsglas.

17. Artikel nach Patentanspruch 16, worin das Laminat nützlich ist in einem Automobil, Zug, oder Schiff als: Windschutzscheibe, Scheinwerferabdeckung, Glasteile wie Transparentdach, Schiebedach, oder Heck- und/oder Seitenfenster; Innentür; Schrank; Schranktür; Raumteiler.

18. Artikel nach Patentanspruch 17, worin der Artikel eine Windschutzscheibe, Scheinwerferabdeckung, Transparentdach, Schiebedach, oder Rück- und/oder Seitenfenster eines Automobils ist.

19. Artikel nach Patentanspruch 12, worin das Laminat von Nutzen ist für: Aussenfenster von Gebäuden; Außentüren; Trennwände; Bürofenster; Bürotüren; Glastrennwände; Tischplatten; Einbauplatten; Schranktüren; Schutzabdeckungen für Tische; Raumteiler; Bilderrahmenglas; Vitrinen; Schaukästen.

20. Artikel nach Patentanspruch 12, worin das Laminat, worin das Laminat durch ein Verfahren erhalten wird, das folgende Schritte umfasst: (i) In Kontaktbringen einer PVB-Polymerzwischenschicht und einer Glasplatte; (ii) Entfernen der Luft zwischen dem Glas und der Zwischenschicht; und (iii) Einsatz von Hitze und externem Druck um die Glasplatte auf der Zwischenschicht adhäsiv zu kleben.

21. Verfahren zur Herstellung eines PVB-Blattes mit reduzierter Verfärbung, umfassend die folgenden Schritte: (I) Beimischung von Polyvinylalkohol, Butyraldehyd, einer Säure oder einer Mischung von Säuren, Wasser und einem Tensid (II) Stabilisierung der in Schritt (I) erhaltenen Mischung durch (a) Erhöhung des pH-Werts der Mischung bis mindestens zum pH-Wert 10 (b) Isolierung des Harzes durch Drainage der Flüssigkeit, (c) Waschen des Harzes mit Wasser mit neutralem pH-Wert; (III) Plastifizierung der PVB-Harz-Zusammensetzung mit einem Weichmacher in einer begrenzten Menge von weniger als 30 pph basierend auf dem Trockengewicht des PVB-Harzes; (IV) wahlweises Mischen (a) einer PVB-Bleichverbindung und/oder (b) eines Antoxidationsmittels und eines UV-Licht-Stabilisators mit der PVB-Harz-Zusammensetzung; und (V) Extrusion der PVB-Zusammensetzung bei einer Temperatur von 225°C bis 245°C, um ein PVB-Blatt zu erhalten, das eine Tg im Bereich von 35°C bis 60°C und ein YID von weniger als ungefähr 12 hat, worin (a) die PVB-Bleichverbindung optional ist, wenn der Weichmacher auch eine Bleichverbindung ist.

22. Das Verfahren nach Patentanspruch 21, worin das Tensid auch die Funktion einer Bleichverbindung ausführt.

23. Verfahren nach Patentanspruch 22, worin das Tensid Natriumdioctylsulfosuccinat ist.

## Revendications

1. Composition de PVB plastifié constituée essentiellement: d'un polyvinylbutyral (PVB) présentant un indice hydroxyle de 15 à 25; d'un plastifiant ou d'un mélange de plastifiants présent dans une quantité finie de moins de 30 pph basés sur le poids sec de la composition de résine; d'un tensioactif; et incluant éventuellement soit (i) un composé de blanchiment du PVB, soit (ii) un antioxydant et un stabilisateur de lumière UV, soit (iii) à la fois (i) et (ii), où (i) est facultatif seulement si le tensioactif est également un composé de blanchiment.

2. Composition suivant la revendication 1, dans laquelle le plastifiant est le di(2-éthylhexanoate) de triéthylèneglycol.

3. Composition suivant la revendication 2, dans laquelle le plastifiant est le dibutylsébacate.

4. Composition suivant la revendication 3, dans laquelle la composition inclut un composé de blanchiment, un antioxydant et un stabilisateur de lumière UV.

5. Composition suivant la revendication 1, dans laquelle le tensioactif effectue également la fonction d'un composé de blanchiment.

6. Composition suivant la revendication 5, dans laquelle le tensioactif est le dioctylsulfosuccinate de sodium.

7. Composition suivant la revendication 6, dans laquelle l'antioxydant est le 2,2'-méthylènebis(6-t-butyl-4-méthylphénol).

8. Composition suivant la revendication 7, dans laquelle le plastifiant est présent dans une quantité de 5 à 30 pph.

9. Composition suivant la revendication 8, dans laquelle le plastifiant est présent dans une quantité de 15 à 30 pph.

10. Composition suivant la revendication 9, dans laquelle le plastifiant est présent dans une quantité de 18 à 28 pph.

11. Composition suivant la revendication 10, dans laquelle le plastifiant est présent dans une quantité de 18 à 22 pph.

12. Article comprenant au moins une couche de la composition de PVB suivant l'une quelconque des revendications 1-11.

13. Article suivant la revendication 12, où l'article est un stratifié comprenant au moins une intercouche de la composition de PVB suivant l'une quelconque des revendications 1-11, dans lequel l'intercouche possède un indice de jaune (YID) de moins d'environ 12 et dans lequel l'intercouche a été obtenue par un procédé comprenant l'étape: d'extrusion d'une feuille de PVB à une température dans l'intervalle de 225°C à 245°C.

14. Article suivant la revendication 13, où l'article est un stratifié comprenant au moins une couche de PVB et au moins une couche de verre, dans lequel la couche de PVB possède une épaisseur dans l'intervalle de 0,254 mm à 1,6 mm.

15. Article suivant la revendication 14, où le stratifié comprend plus d'une intercouche de PVB et dans lequel l'épaisseur combinée des intercouches de PVB est dans l'intervalle de 0,75 à 1,6 mm.

16. Article suivant la revendication 14, où le stratifié est utile comme: verre architectural; verre d'automobile; verre de train; ou verre de bateau.

17. Article suivant la revendication 16, où le stratifié est utile dans une automobile, un train ou un bateau comme: un pare-brise; un protège-phare; un vitrage de carrosserie, tel qu'un toit ouvrant ou une fenêtre arrière et/ou latérale; une porte interne; une cabine; une porte de cabine; une séparation.

18. Article suivant la revendication 17, où l'article est un pare-brise, un protège-phare, un toit ouvrant ou une fenêtre arrière et/ou latérale d'automobile.

19. Article suivant la revendication 12, où le stratifié est utile pour: des fenêtres externes sur des immeubles; des portes externes; des séparations; des fenêtres de bureau; des portes de bureau; des séparations de verre; des dessus de table; des étagères; des portes de meuble; des housses de protection pour tables; des diviseurs de pièce; un verre de cadre de peinture; des armoires vitrées; des vitrines d'exposition.

20. Article suivant la revendication 12, où le stratifié est obtenu par un procédé comprenant les étapes consistant: (i) à amener une intercouche de polymère de PVB et une plaque de verre en contact; (ii) à retirer l'air entre le verre et l'intercouche; et (iii) à appliquer une chaleur et une pression externe pour lier de façon adhésive la plaque de verre à l'intercouche.

21. Procédé pour la préparation d'une feuille de PVB peu colorée comprenant les étapes: (I) de mélange de polyvinylalcool, de butyraldéhyde, d'un acide ou d'un mélange d'acides, d'eau et d'un tensioactif; (II) de stabilisation du mélange obtenu dans l'étape (I) par (a) l'élévation du pH du mélange à au moins pH 10, (b) l'isolement de la résine en drainant le liquide, (c) le lavage de la résine avec une eau à pH neutre; (III) de plastification de la composition de résine de PVB avec un plastifiant dans une quantité finie de moins de 30 pph basés sur le poids sec de la résine de PVB; (IV) de mélange éventuel (a) d'un composé de blanchiment de PVB et/ou (b) d'un antioxydant et d'un stabilisateur de lumière UV avec la composition de résine de PVB; et (V) d'extrusion de la composition de PVB à une température de 225°C à 245°C pour obtenir une feuille de PVB présentant une Tg dans l'intervalle de 35°C à 60°C et un YID de moins d'environ 12, dans lequel (a) le composé de blanchiment de PVB est facultatif seulement si le tensioactif est également un composé de blanchiment.

22. Procédé suivant la revendication 21, dans lequel le tensioactif effectue également la fonction d'un composé de blanchiment.

23. Procédé suivant la revendication 22, dans lequel le tensioactif est le dioctylsulfosuccinate de sodium.
